# EUROPÄISCHE PATENTSCHRIFT

(11) **EP 1 825 915 B1**
(45) Veröffentlichungstag und Bekanntmachung des Hinweises auf die Patenterteilung: **10.08.2016**
(21) Anmeldenummer: 06027038.6
(22) Anmeldetag: 29.12.2006
(51) Int. Cl.: G01N 31/18, B01L 3/02

(54) **System und Verfahren zum Titrieren von Flüssigkeiten**
System and method for titrating fluids
Système et procédé de titrage de liquides

(30) Priorität: 28.02.2006 DE 102006009816
(43) Veröffentlichungstag der Anmeldung: 29.08.2007
(60) Teilanmeldung: 11005054.9
(73) Patentinhaber: EPPENDORF AG, 22339 Hamburg (DE)
(72) Erfinder: Köhn, Heinz-Gerhard, 22397 Hamburg (DE); Andres, Karl-Friedrich, 22941 Bargteheide (DE)
(74) Vertreter: Hauck Patentanwaltspartnerschaft mbB

(56) Entgegenhaltungen:
- EP-A- 0 576 967
- EP-A- 0 657 216
- EP-A- 0 691 158
- DD-A1- 267 331
- DE-A1- 2 617 346
- DE-A1- 19 723 852
- US-A- 2 650 256
- US-A- 4 563 907
- US-A- 4 821 586
- US-A- 5 002 737
- US-A1- 2003 099 578

## Beschreibung

Die Erfindung bezieht sich auf ein System und auf ein Verfahren zum Titrieren von Flüssigkeiten.

Die Titrimetrie oder Maßanalyse ist ein Bestimmungsverfahren der chemischen Analyse, bei dem die zu bestimmende gelöste Substanz (Titrant) mit einer weiteren, ebenfalls meist in Lösung befindlichen Substanz bekannter Konzentration (Titrans, Titrierflüssigkeit, Maßlösung) bis zu einem Endpunkt, Äquivalenzpunkt oder Zielpunkt (nachfolgend zusammenfassend "Endpunkt" genannt) umgesetzt wird. Der Bestimmungsvorgang heißt Titration. Der Endpunkt wird z.B. durch ein Indikatorsystem angezeigt oder auf elektrochemischem Weg oder anhand einer Fällungsreaktion erkannt.

Zur Abmessung der Maßlösung wird herkömmlicherweise die Bürette eingesetzt. Bekannt ist ferner ein Dosiersystem, das zu Titrationszwecken einsetzbar ist. Dieses hat eine als Handgerät ausgeführte Dosiervorrichtung, in die eine Spritze für die Aufnahme und Abgabe von Flüssigkeit einsetzbar ist. Für die Bestückung der Dosiervorrichtung gibt es Spritzen mit verschiedenen Nennvolumina. Das Dosiersystem ist in einen Titriermodus schaltbar, der sich dadurch auszeichnet, daß die Geschwindigkeit des Spritzenkolbens bzw. der abgegebene Mengenstrom bei jedem Abgabeschritt automatisch um eine Stufe verringert wird, um ein genaues Titrieren zu ermöglichen. Schließlich bleibt die Geschwindigkeit auf der untersten Stufe konstant.

Bei den bisherigen Titriersystemen besteht das Risiko, daß bei versehentlicher, falscher Vorgehensweise im Bereich des Endpunktes zuviel Flüssigkeit abgegeben werden kann. Auch wenn mit dem bekannten Dosiersystem in der Nähe des Endpunktes ein geringer Mengenstrom abgegeben wird, kann es vorkommen, daß der Endpunkt verfehlt wird. Beispielsweise wird das Erreichen des Endpunktes zu spät erkannt, weil sich Titrant und Titrans nicht sogleich homogen vermischen und umsetzen. Außerdem benötigt der Anwender vom Erkennen des Endpunktes bis zum Loslassen der Auslösetaste eine Reaktionszeit, während der weiteres Titrans zuströmt und der Endpunkt überschritten werden kann. Bei Benutzung der Dosiervorrichtung mit Spritzen, die unterschiedliche Nennvolumina aufweisen, können die abgegebenen Mengenströme bei einem bestimmten Abgabeschritt sehr unterschiedlich sein. Die Verwendung verschiedener Spritzen kann ebenfalls das Ermitteln des Endpunktes erschweren.

Wird der Endpunkt z.B. im Rahmen einer pH-Einstellung für eine ungepufferte oder schwach gepufferte Lösung verfehlt, so kann der Korrekturaufwand sehr zeitintensiv sein. Auch ist es möglich, daß Korrekturen zu einer Verdünnung der interessierenden Komponente(n) in der zu bearbeitenden Lösung führen, die für die folgenden Arbeitsschritte zu hoch ist. Die titrierte Lösung muß dann verworfen werden. Wird bei einer analytischen Aufgabe der Endpunkt überschritten, kann mitunter der wahrscheinliche Endpunkt durch Interpolation gefunden werden. Ist dies nicht möglich oder aufgrund von Verfahrensvorgaben nicht erlaubt, muß die Titration mit einer weiteren Probe wiederholt werden.

Die US 4,821,586 beschreibt ein Verfahren zum Titrieren von Flüssigkeiten, bei dem in einer ersten Abgabephase das einmalige Betätigen und Entlasten eines Bedienelements die Abgabe eines voreingestellten Abgabevolumens bewirkt. In einer anschließenden zweiten Abgabephase startet die Flüssigkeitsabgabe bei jeder Betätigung des Bedienelements mit einer festgelegten Abgabegeschwindigkeit. Während der Betätigung des Bedienelements wird die Abgabegeschwindigkeit bis zum Erreichen einer Maximalgeschwindigkeit oder bis zum Entlasten des Bedienelements beschleunigt.

Davon ausgehend liegt der Erfindung die Aufgabe zugrunde, ein System und Verfahren zum Titrieren zur Verfügung zu stellen, daß es ermöglicht, die Erkennung des Endpunktes der Titration zu erleichtern.

Die Aufgabe wird durch ein System mit den Merkmalen des Anspruches 1 gelöst. Vorteilhafte Ausgestaltungen des Systems sind in den Unteransprüchen 2 bis 17 angegeben.

Gemäß Anspruch 1 hat das System zum Titrieren von Flüssigkeiten
- eine Spritze oder Spitze, umfassend
- eine Halteeinrichtung,
   und
- eine Dosiervorrichtung, umfassend
- eine weitere Halteeinrichtung zum Halten der Spritze oder Spitze an der Halteeinrichtung,
- eine einen Motor aufweisende Antriebseinrichtung,
- die lösbar mit einem Kolben der Spritze gekoppelt ist, wenn diese von der weiteren Halteeinrichtung gehalten ist,
- oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung zum Bedienen der Dosiervorrichtung und
- eine mit der Bedieneinrichtung und der Antriebseinrichtung verbundene Steuereinrichtung, die derart ausgebildet ist, dass sie bei Betätigung des Bedienelements der Bedieneinrichtung in einer ersten Abgabephase eine Bewegung des Kolbens für die Abgabe großer Flüssigkeitsmengen und bei Nichtbetätigung des Bedienelements das Ruhen des Kolbens steuert, wobei die Steuereinrichtung bei jeder nachfolgenden Betätigung des Bedienelements die Geschwindigkeit des Kolbens gegenüber seiner Geschwindigkeit bei der vorangehenden Betätigung reduziert, und ausgelöst durch eine Betätigung der Bedieneinrichtung oder durch das Erreichen des Endes der ersten Abgabephase in einer zweiten Abgabephase eine Bewegung des Kolbens für die Abgabe mindestens einer kleinen definierten Flüssigkeitsmenge steuert, gekennzeichnet dadurch dass die Abgabe mindestens einer kleinen definierten Flüssigkeitsmenge in Form von von der Spritze oder Spitze abgeschleuderten Tröpfchen erfolgt.

Das erfindungsgemäße System weist eine Spritze oder Spitze und eine Dosiervorrichtung auf.

Die Spritze umfaßt einen Zylinder und einen darin verschieblichen Kolben, wobei der Zylinder eine Durchgangsöffnung für Probenflüssigkeit aufweist. Bei der Spitze handelt es sich um ein Röhrchen, das insbesondere ganz oder teilweise zylindrisch und/oder konisch ausgeführt sein kann, und an einem Ende eine Durchgangsöffnung für Probenflüssigkeit und an dem anderen Ende eine Durchgangsöffnung für Luft aufweist. Die Dosiervorrichtung weist eine Steuereinrichtung auf, welche in einer ersten Abgabephase eine Bewegung des Kolbens für die Abgabe großer Flüssigkeitsmengen steuert und in einer zweiten Abgabephase eine Bewegung des Kolbens für die Abgabe mindestens einer kleinen definierten Flüssigkeitsmenge steuert. Infolgedessen kann in der ersten Abgabephase der Endpunkt grob angenähert und in der zweiten Abgabephase genau erreicht werden. Die Abgabe kleiner definierter Flüssigkeitsmengen in der zweiten Abgabephase begünstigt die genaue Ermittlung des Endpunktes und vermeidet ein Überschreiten des Endpunktes infolge einer Reaktionszeit. Infolgedessen kann der Anwender den Endpunkt leichter auffinden.

Die kleinen definierten Flüssigkeitsmengen können ein Volumen in einem weiten Bereich aufweisen. Gemäß einer weiteren Ausgestaltung steuert die Steuereinrichtung die Abgabe kleiner definierter Flüssigkeitsmengen mit einem Volumen, das kleiner als 1/100 des Nennvolumens der Spritze oder Spitze ist. Gemäß einer weiteren Ausgestaltung steuert die Steuereinrichtung die Abgabe kleiner definierter Flüssigkeitsmengen mit einem Volumen, das kleiner als 1/500 des Nennvolumens der Spritze oder Spitze ist. Gemäß einer weiteren Ausgestaltung steuert die Steuereinrichtung die Abgabe kleiner definierter Flüssigkeitsmengen mit einem Volumen im Bereich von etwa einem oder mehreren Tausendstel des Nennvolumens der Spritze oder Spitze.

Die Steuereinrichtung steuert die Abgabe kleiner definierter Flüssigkeitsmengen in Form von Tröpfchen. Die Tröpfchen werden von der Spritze oder Spitze abgeschleudert. Gemäß einer Ausgestaltung kann die Steuereinrichtung umgeschaltet werden, von einer Betriebsweise, in der Tröpfchen abgeschleudert werden und einer Betriebsweise, in der Tröpfchen ablaufen.

Die Steuereinrichtung steuert bei Betätigung eines Bedienelementes der Bedieneinrichtung in der ersten Abgabephase die Bewegung des Kolbens und bei Nichtbetätigung des Bedienelementes das Ruhen des Kolbens. Folglich wird in der ersten Abgabephase Flüssigkeit abgegeben, solange der Anwender das Bedienelement betätigt. Gemäß einer weiteren Ausgestaltung reduziert die Steuereinrichtung bei jeder nachfolgenden Betätigung des Bedienelementes die Geschwindigkeit des Kolbens gegenüber seiner Geschwindigkeit bei einer vorangehenden Betätigung. Hierdurch werden Abgabeschritte ermöglicht, in denen der Mengenstrom der abgegebenen Flüssigkeit mit jedem Schritt abnimmt.

Die zweite Abgabephase kann auf verschiedene Weise eingeleitet werden. Gemäß einer Ausgestaltung steuert die Steuereinrichtung nur über eine vorgegebene Anzahl von Betätigungen des Bedienelementes eine Bewegung des Kolbens und leitet nach Erreichen der maximalen Anzahl die zweite Abgabephase ein. Gemäß einer weiteren Ausgestaltung leitet die Steuereinrichtung bei einer definierten Betätigung der Bedieneinrichtung die zweite Abgabephase ein. Die beiden Ausgestaltungen sind auch miteinander kombinierbar, so daß der Anwender jederzeit die zweite Abgabephase einleiten kann.

Gemäß einer weiteren Ausgestaltung ist die Steuereinrichtung mit einem Sensor verbunden, der auf ein Volumen ausgerichtet ist, auf das die Abgabeöffnung einer Spritze oder Spitze gerichtet ist, wenn sie von der weiteren Halteeinrichtung an der Dosiervorrichtung gehalten ist, um eine Annäherung an den Zielpunkt der Titration zu erkennen und reduziert die Steuereinrichtung beim Annähern an den Zielpunkt der Titration in der ersten Abgabephase die Geschwindigkeit des Kolbens und/oder leitet die zweite Abgabephase ein. Bei dieser Ausgestaltung wird die Geschwindigkeit des Kolbens in der ersten Abgabephase automatisch gesteuert und/oder die zweite Abgabephase automatisch eingeleitet, z.B. wenn der Sensor einen Farbumschlag eines Indikatorsystems und/oder eine Änderung der Leitfähigkeit und/oder eine Fällungsreaktion erkennt. Diese Ausgestaltung kann mit mindestens einer den beiden vorstehenden Ausgestaltungen für das Einleiten der zweiten Abgabephase kombiniert werden, so daß der Anwender unter verschiedenen Möglichkeiten der Einleitung der zweiten Abgabephase wählen kann.

Die Halteeinrichtung und die weitere Halteeinrichtung können unterschiedlich ausgeführt sein. Gemäß einer Ausgestaltung ist die Halteeinrichtung so ausgeführt wie der Befestigungsabschnitt und die weitere Halteeinrichtung so ausgeführt wie die Greifeinrichtungen des Pipettensystems gemäß EP 0 656 229 B1, deren diesbezügliche Ausführungen durch Bezugnahme in die vorliegende Anmeldung einbezogen sind.

Gemäß einer Ausgestaltung umfaßt die Halteeinrichtung einen Flansch an einem zylindrischen oder hülsenförmigen Körper der Spritze oder Spitze und/oder einem Bund am Ende eines Kolbens der Spritze. Gemäß einer weiteren Ausgestaltung umfaßt die weitere Halteeinrichtung eine Steckaufnahme der Dosiervorrichtung und mindestens einen Greifer, der aus einer die Halteeinrichtung freigebenden Position in eine die Halteeinrichtung erfassende Position innerhalb der Steckaufnahme bewegbar ist.

Die Antriebseinrichtung kann verschiedene Motoren aufweisen. Möglich sind beispielsweise Ausführungen mit pneumatischem oder hydraulischem Motor. Gemäß einer Ausgestaltung weist die Antriebseinrichtung einen Elektromotor auf. Der Elektromotor kann unterschiedlicher Bauart sein. Gemäß einer Ausgestaltung ist der Elektromotor ein Gleichstrommotor.

Gemäß einer Ausgestaltung ermittelt die Steuereinrichtung die Menge der abgegebenen Flüssigkeit. Die insgesamt in der ersten Abgabephase abgegebene Flüssigkeitsmenge kann durch Addieren der mit jedem Schritt abgegebenen großen Flüssigkeitsmengen ermittelt werden. Die in der zweiten Abgabephase insgesamt abgegebene Flüssigkeitsmenge kann durch Zählen der abgegebenen kleinen definierten Flüssigkeitsmengen ermittelt werden.

Die Ermittlung abgegebener Flüssigkeitsmengen kann auf verschiedene Weise erfolgen. Beispielsweise kann die Erfassung dadurch erfolgen, daß als Motor ein Schrittmotor verwendet wird und die Steuereinrichtung die Schritte ermittelt, die der Schrittmotor zum Verlagern des Kolbens ausführt. Anhand der Schritte und der Schrittweiten kann die Steuereinrichtung die Verlagerung des Kolbens ermitteln. Gemäß einer Ausgestaltung ist die Antriebseinrichtung und/oder der Kolben mit einem Inkrementgeber zum Ermitteln der Position des Kolbens gekoppelt und ist die Steuereinrichtung mit dem Sensor zum Abtasten des Inkrementgebers gekoppelt. Hierbei wird die tatsächliche Verlagerung der Antriebseinrichtung bzw. des Kolbens ermittelt und der Ermittlung der abgegebenen Flüssigkeitsmenge zugrunde gelegt.

Die Bedieneinrichtung kann unterschiedlich ausgeführt sein, wobei beispielsweise pneumatische oder hydraulische Schaltventile möglich sind, insbesondere in Verbindung mit einem pneumatischen oder hydraulischen Motor. Gemäß einer Ausgestaltung umfaßt die Bedieneinrichtung mindestens eine elektrische Taste und/oder elektrischen Schalter.

Verschiedene Ausführungen der Steuereinrichtungen sind möglich, beispielsweise eine pneumatische oder hydraulische Steuereinrichtung, insbesondere in Verbindung mit einem pneumatischen oder hydraulischen Motor. Gemäß einer Ausgestaltung ist die Steuereinrichtung eine elektrische Steuereinrichtung. Gemäß einer weiteren Ausgestaltung ist die Steuereinrichtung programmgesteuert. Die Steuereinrichtung weist beispielsweise einen Microcomputer oder Microcontroler auf.

Gemäß Anspruch 18 umfaßt das Verfahren zum Titrieren von Flüssigkeiten mit einem System zum Titrieren von Flüssigkeiten mit
- einer Spritze oder Spitze, umfassend
- eine Halteeinrichtung,
   und
- einer Dosiervorrichtung, umfassend
- eine weitere Halteeinrichtung zum Halten der Spritze oder Spitze an der Halteeinrichtung,
- eine einen Motor aufweisende Antriebseinrichtung, die lösbar mit einem Kolben der Spritze gekoppelt ist, wenn diese von der weiteren Halteeinrichtung gehalten ist, oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung zum Bedienen der Dosiervorrichtung und
- eine mit der Bedieneinrichtung und der Antriebseinrichtung verbundene Steuereinrichtung, die folgenden Schritte: eine Spritze oder Spitze wird lösbar mit einer Dosiervorrichtung verbunden,
- in einer ersten Abgabephase wird ein Kolben der Spritze oder ein Kolben in einem Zylinder, der mit der Spitze verbunden ist, bei Betätigung eines Bedienelementes für die Abgabe großer Flüssigkeitsmengen bewegt und bei Entlastung des Bedienelementes angehalten und bei jeder nachfolgenden Betätigung des Bedienelementes die Geschwindigkeit des Kolbens gegenüber seiner Geschwindigkeit bei einer vorangehenden Betätigung reduziert,
- in einer zweiten Abgabephase wird der Kolben bei jeder Betätigung des Bedienelementes für die Abgabe mindestens einer kleinen definierten Flüssigkeitsmenge bewegt, gekennzeichnet dadurch, dass die Abgabe mindestens einer kleinen definierten Flüssigkeitsmenge in Form von von der Spritze oder Spitze abgeschleuderten Tröpfchen erfolgt.

Gemäß einer Ausgestaltung wird bei einer vorgegebenen Anzahl von Betätigungen des Bedienelementes die zweite Abgabephase eingeleitet.

Gemäß einer Ausgestaltung wird nach einer speziellen Betätigung eines Bedienelementes die zweite Abgabephase eingeleitet.

Gemäß einer Ausgestaltung wird die Lösung mit der zu bestimmenden Substanz überwacht und bei Annäherung an den Zielpunkt der Titration die Geschwindigkeit des Kolbens reduziert und/oder die zweite Abgabephase eingeleitet.

Nachfolgend wird die Erfindung anhand der anliegenden Zeichnungen von Ausführungsbeispielen näher erläutert. In den Zeichnungen zeigen:

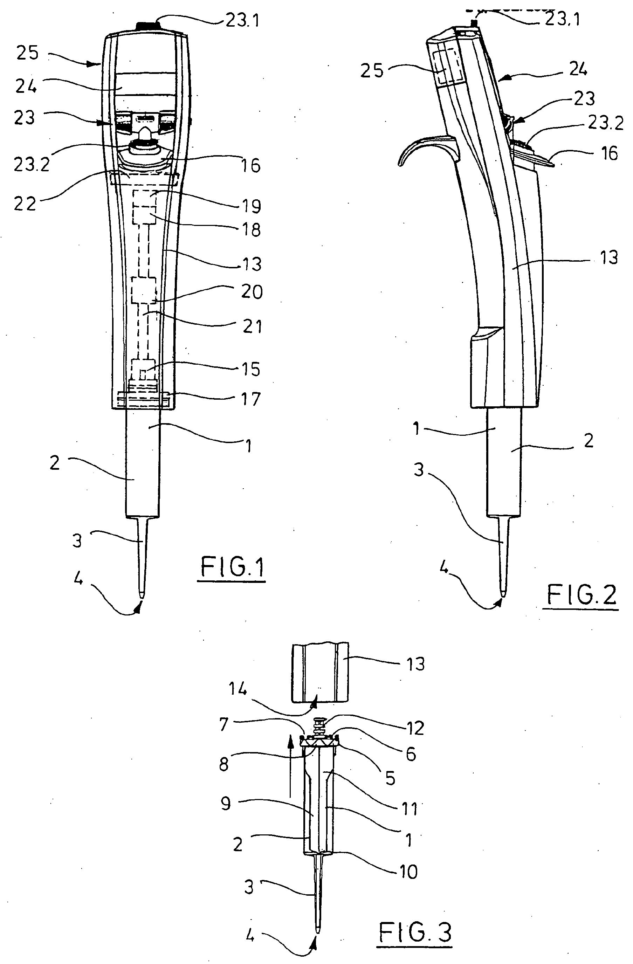

- Fig. 1: eine Spritze mit einer diese haltenden Dosiervorrichtung in Vorderansicht;
- Fig. 2: dieselbe Spritze und die diese haltende Dosiervorrichtung in einer Seitenansicht;
- Fig. 3: die Spritze beim Einsetzen in den unteren Teil der Dosiervorrichtung in Vorderansicht.

Eine Spritze 1 hat einen Zylinder 2, der unten ein Röhrchen 3 mit einer Durchgangsöffnung 4 am unteren Ende aufweist. Oben hat der Zylinder 2 einen Flansch 5, der auf der Oberseite Erhebungen 6 und Vertiefungen 7 aufweist. Durch die spezielle Anordnung der Erhebungen 6 und Vertiefungen 7 ist eine Kennzeichnung der Spritze 1 gegeben, die deren Nennvolumen angibt. Am Außenumfang des Flansches 5 sind Führungsnuten 8 vorhanden, um die Spritze 1 in bestimmten Winkelstellungen in einer Aufnahme auszurichten.

Im Inneren der Spritze 1 ist ein Kolben 9 angeordnet, der unten einen abdichtend im Zylinder 2 geführten zylindrischen bzw. tellerförmigen Bereich 10 und eine damit verbundene Kolbenstange 11 aufweist. Die Kolbenstange 11 hat oben umlaufende Wulste 12, die der Fixierung des Kolbens 9 in einer Kolbenaufnahme dienen.

Eine Dosiervorrichtung 13 hat ein Gehäuse, in dem unten eine Steckaufnahme 14 für den Flansch 5 der Spritze 1 aufweist. In der Dosiervorrichtung 13 ist eine verschiebbare Kolbenaufnahme 15 für den Kolben vorhanden. Der Flansch 5 und die Kolbenstange 11 des Kolbens 9 werden mittels nicht gezeigter Greifeinrichtungen in der Dosiervorrichtung 13 gehalten.

Einzelheiten der Spritze 1 und der weiteren Halteeinrichtungen zum Halten der Spritze 1 in der Dosiervorrichtung 13 sind in der EP 0 656 229 B1 beschrieben, auf die insoweit Bezug genommen wird.

Ferner weist die Dosiervorrichtung 13 eine Abwerfertaste 16 auf, die es ermöglicht, die Halteeinrichtung zentral zu lösen. Einzelheiten dieses Zentralabwurfes für die Spritze 1 sind in der deutschen Patentanmeldung 10 2005 0023 203.5 beschrieben, deren diesbezügliche Ausführungen durch Bezugnahme in die vorliegende Anmeldung einbezogen sind.

Ferner umfaßt die Dosiervorrichtung eine Leseeinrichtung 17 zum Abtasten der Erhebungen 6 und Vertiefungen 7. Einzelheiten der Leseeinrichtung 17 und der Kennzeichnung der Spritzen 1 durch Erhebungen und Vertiefungen sind in der EP 0 657 216 B1 beschrieben, auf die insoweit Bezug genommen wird.

Die Dosiervorrichtung 13 umfaßt eine Antriebseinrichtung 18, die einen Elektromotor 19 aufweist. Der Elektromotor 19 ist über ein Getriebe 20 mit einer Hubstange 21 mit der Kolbenaufnahme 15 gekoppelt.

Ferner umfaßt die Dosiervorrichtung 13 eine elektronische Steuereinrichtung 22. Diese ist mit der elektrischen Antriebseinrichtung 18 elektrisch verbunden. Ferner ist sie mit einer Bedieneinrichtung 23 und einem Display 24 verbunden, die sich im Oberbereich der Dosiervorrichtung 13 befinden. Die Bedieneinrichtung 23 umfaßt einen Schiebeschalter 23.1 oder dgl. zum Einstellen einer Betriebsart der Dosiervorrichtung 13. Der Schiebeschalter ermöglicht eine Auswahl unter den Betriebsarten Titrieren, Pipettieren, Dispensieren, automatisches Dispensieren, Aspirieren und sequentielles Dispensieren.

Ferner umfaßt die Dosiervorrichtung 13 eine elektrische Spannungsversorgung 25 in Form eines Akkumulators. Der Akkumulator ist mittels eines externen Netzteiles aufladbar.

Im Titriermodus ist eine Bewegung des Kolbens 9 mit verschiedenen Geschwindigkeiten möglich. Bei jeder Betätigung einer Auslösetaste 23.2 der Dosiervorrichtung wird der Kolben 9 mit einer geringeren Geschwindigkeit gesteuert. Die Geschwindigkeiten auf jeder Stufe hängen ab vom Nennvolumen der Spritze 1, die die Leseeinrichtung 17 der Steuereinrichtung anzeigt.

Das Ausführungsbeispiel weist zehn verschiedene Geschwindigkeiten für die Bewegung des Kolbens 9 bei der Abgabe von Flüssigkeit im Titriermodus auf. Nachdem die kleinste Geschwindigkeitsstufe erreicht wird, wird durch eine weitere Betätigung der Auslösetaste 23.2 die Abgabe einer definierten kleinen Flüssigkeitsmenge im Freistrahl ausgelöst. Insgesamt stellt sich der Vorgang der Aufnahme und Abgabe von Flüssigkeit im Titriermodus folgendermaßen dar:
Für die Aufnahme von Flüssigkeit wird die Auslösetaste 23.2 einmal kurz gedrückt. Die Flüssigkeitsaufnahme wird durch eine zweite Betätigung der Auslösetaste 23.2 gestoppt. Anderenfalls wird automatisch Flüssigkeit entsprechend dem Nennvolumen der Spritze 1 aufgezogen.

Danach bewirkt eine weitere Betätigung der Auslösetaste 23.2 einen kleinen Umkehrhub, der ein Spiel zwischen Antriebseinrichtung 18 und Kolben 9 ausgleicht. Dabei wird eine geringe Menge der aufgezogenen Flüssigkeit verworfen.

Bei einer weiteren Betätigung der Auslösetaste wird der Kolben 9 zunächst mit maximaler Geschwindigkeit bewegt, solange, wie die Auslösetaste 23.2 gedrückt gehalten wird. Bei Loslassen der Auslösetaste 23.2 wird der Kolben angehalten.

Ein erneuter Druck auf die Auslösetaste 23.2 führt zu einem weiteren Bewegen des Kolbens 9 mit der zweithöchsten Geschwindigkeit.

Bei jeder weiteren Entlastung und Betätigung der Auslösetaste 23.2 wird eine niedrigere Geschwindigkeitsstufe erreicht, bis in der zehnten Stufe der Kolben 9 mit der geringsten Geschwindigkeit abgesenkt wird.

Danach bewirkt jede weitere Betätigung der Auslösetaste 23.2 die tröpfchenweise Abgabe von Flüssigkeit mit großer Geschwindigkeit. Die Tröpfchen haben ein Volumen, das etwa einem Tausendstel des Nennvolumens der Spritze 1 entspricht.

Durch Betätigung der Bedieneinrichtungen 23 ist es ferner möglich, von jeder Geschwindigkeitsstufe direkt auf die tröpfchenweise Abgabe von Flüssigkeit umzuschalten. Ferner ist auch durch geeignete Betätigung der Bedieneinrichtung 23 eine automatische Tröpfchenabgabe dergestalt möglich, daß in bestimmten Zeitabständen einzelne Tröpfchen abgegeben werden.

Dabei wird durch die kurze Betätigung der Auslösetaste 23.2 eine tröpfchenweise Abgabe gesteuert und durch eine anhaltende Betätigung der Auslösetaste 23.2 ein Vorfahren des Kolbens 9 bis zum Anschlag am unteren Ende des Zylinders 2. Nach Erreichen des Endpunktes ist es somit dem Anwender möglich, die noch in der Spritze 1 enthaltene Restlösung schnell zu verwerfen.

Die Anzeige 24 zeigt das insgesamt abgegebene Flüssigkeitsvolumen an, das die Steuereinrichtung 22 ermittelt. Zur Ermittlung des abgegebenen Flüssigkeitsvolumens wird die Bewegung des Elektromotors 19 mittels einer nicht gezeigten Anordnung aus einem Inkrementgeber und einem Sensor erfaßt.

Nach dem Titrieren kann die Spritze 1 leicht durch Betätigen der Abwerfertaste 16 abgeworfen werden.

## Patentansprüche

1. System zum Titrieren von Flüssigkeiten mit den folgenden Merkmalen:
- eine Spritze (1) oder Spitze, umfassend
- eine Halteeinrichtung,
und
- eine Dosiervorrichtung (13), umfassend
- eine weitere Halteeinrichtung zum Halten der Spritze (1) oder Spitze an der Halteeinrichtung,
- eine einen Motor (19) aufweisende Antriebseinrichtung (18),
- wobei die Antriebseinrichtung (18) lösbar mit einem Kolben (9) der Spritze (1) gekoppelt ist, wenn diese von der weiteren Halteeinrichtung gehalten ist,
- oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung (23) zum Bedienen der Dosiervorrichtung (13), **gekennzeichnet durch**
- eine mit der Bedieneinrichtung (23) und der Antriebseinrichtung (18) verbundene Steuereinrichtung (22), die derart ausgebildet ist, dass sie bei Betätigung eines Bedienelementes (23.2) der Bedieneinrichtung (23) in einer ersten Abgabephase eine Bewegung des Kolbens (9) für die Abgabe großer Flüssigkeitsmengen und bei Nichtbetätigung des Bedienelementes das Ruhen des Kolbens (9) steuert, wobei die Steuereinrichtung (22) bei jeder nachfolgenden Betätigung des Bedienelementes (23.2) die Geschwindigkeit des Kolbens (9) gegenüber seiner Geschwindigkeit bei der vorangehenden Betätigung reduziert, und ausgelöst **durch** eine Betätigung der Bedienungseinrichtung (23) oder **durch** das Erreichen des Endes der ersten Abgabephase in einer zweiten Abgabephase eine Bewegung des Kolbens (9) für die Abgabe mindestens einer kleinen definierten Flüssigkeitsmenge steuert, **gekennzeichnet dadurch, dass** die Abgabe mindestens einer kleinen definierten Flüssigkeitsmenge in Form von von der Spritze oder Spitze abgeschleuderten Tröpfchen erfolgt.

2. System nach Anspruch 1, bei dem die Steuereinrichtung (22) die Abgabe kleiner definierter Flüssigkeitsmengen mit einem Volumen, das kleiner als 1/100 des Nennvolumens der Spritze (1) oder Spitze ist, steuert.

3. System nach Anspruch 2, bei dem die Steuereinrichtung (22) die Abgabe kleiner definierter Flüssigkeitsmengen mit einem Volumen, das kleiner als 1/500 des Nennvolumens der Spritze (1) oder Spitze ist, steuert.

4. System nach Anspruch 3, bei dem die Steuereinrichtung (22) die Abgabe kleiner definierter Flüssigkeitsmengen mit einem Volumen im Bereich von etwa einem oder mehreren Tausendstel des Nennvolumens der Spritze (1) oder Spitze steuert.

5. System nach Anspruch 1, bei dem die Steuereinrichtung (22) derart ausgebildet ist, dass sie nur über eine vorgegebene Anzahl von Betätigungen des Bedienelementes eine Bewegung des Kolbens (9) steuert und nach Erreichen der maximalen Anzahl die zweite Abgabephase einleitet.

6. System nach einem der Ansprüche 1 bis 5, bei dem die Steuereinrichtung (22) derart ausgebildet ist, dass sie bei einer definierten Betätigung der Bedieneinrichtung die zweite Abgabephase einleitet.

7. System nach einem der Ansprüche 1 bis 6, bei dem die Steuereinrichtung (22) mit einem Sensor verbunden ist, der auf ein Volumen ausgerichtet ist, auf das die Abgabeöffnung einer Spritze (1) oder Spitze gerichtet ist, wenn sie von der weiteren Halteeinrichtung an der Dosiervorrichtung (13) gehalten ist, um eine Annäherung an den Zielpunkt der Titration zu erkennen, und die Steuereinrichtung (22) derart ausgebildet ist, dass sie beim Annähern an den Zielpunkt der Titration in der ersten Abgabephase die Geschwindigkeit des Kolbens (9) reduziert und/oder die zweite Abgabephase einleitet.

8. System nach einem der Ansprüche 1 bis 7, bei dem die Halteeinrichtung einen Flansch (5) an einem zylindrischen oder hülsenförmigen Körper der Spritze (1) oder Spitze und/oder einen Bund am Ende eines Kolbens (9) der Spritze (1) umfaßt.

9. System nach einem der Ansprüche 1 bis 8, bei dem die weitere Halteeinrichtung eine Steckaufnahme (14) der Dosiervorrichtung (13) und mindestens einen Greifer umfaßt, der aus einer die Halteeinrichtung freigebenden Position in eine die Halteeinrichtung erfassende Position innerhalb der Steckaufnahme (14) bewegbar ist.

10. System nach einem der Ansprüche 1 bis 9, bei dem die Antriebseinrichtung (18) einen Elektromotor (19) umfaßt.

11. System nach Anspruch 10, bei dem der Elektromotor (19) ein Gleichstrommotor ist.

12. System nach einem der Ansprüche 1 bis 11, bei dem die Steuereinrichtung (22) derart ausgebildet ist, dass sie die Menge der abgegebenen Flüssigkeit ermittelt.

13. System nach einem der Ansprüche 1 bis 12, bei dem die Antriebseinrichtung (18) und/oder der Kolben (9) mit einem Inkrementgeber zum Ermitteln der Position des Kolbens (9) gekoppelt ist und ist die Steuereinrichtung (22) mit einem Sensor zum Abtasten des Inkrementgebers gekoppelt ist.

14. System nach einem der Ansprüche 1 bis 13, bei dem die Bedieneinrichtung (23) mindestens eine elektrische Taste (23.2) und/oder elektrischen Schalter umfaßt.

15. System nach einem der Ansprüche 1 bis 14, bei dem die Steuereinrichtung (22) eine elektrische Steuereinrichtung ist.

16. System nach Anspruch 15, bei dem die Steuereinrichtung (22) programmgesteuert ist.

17. Verfahren zum Nitrieren von Flüssigkeiten mit einem System zum Titrieren von Flüssigkeiten mit
- einer Spritze (1) oder Spitze, umfassend
- eine Halteeinrichtung,
und
- einer Dosiervorrichtung (13), umfassend
- eine weitere Halteeinrichtung zum Halten der Spritze (1) oder Spitze an der Halteeinrichtung,
- eine einen Motor (19) aufweisende Antriebseinrichtung (18), die lösbar mit einem Kolben (9) der Spritze (1) gekoppelt ist, wenn diese von der weiteren Halteeinrichtung gehalten ist, oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung (23) zum Bedienen der Dosiervorrichtung (13) und
- eine mit der Bedieneinrichtung (23) und der Antriebseinrichtung (18) verbundene Steuereinrichtung (22), bei dem
- eine Spritze oder Spitze lösbar mit einer Dosiervorrichtung verbunden wird,
- in einer ersten Abgabephase ein Kolben der Spritze oder ein Kolben in einem Zylinder, der mit der Spitze verbunden ist, bei Betätigung eines Bedienelementes für die Abgabe großer Flüssigkeitsmengen bewegt und bei Entlastung des Bedienelementes angehalten wird und bei jeder nachfolgenden Betätigung des Bedienelementes die Geschwindigkeit des Kolbens gegenüber seiner Geschwindigkeit bei einer vorangehenden Betätigung reduziert wird und
- in einer zweiten Abgabephase der Kolben bei jeder Betätigung des Bedienelementes für die Abgabe mindestens einer kleinen definierten Flüssigkeitsmenge in Form von von der Spritze oder Spitze abgeschleuderten Tröpfchen bewegt wird.

18. Verfahren nach Anspruch 17, bei dem nach einer vorgegebenen Anzahl von Betätigungen des Bedienelementes die zweite Abgabephase einleitet.

19. Verfahren nach Anspruch 17 oder 18, bei dem nach einer speziellen Betätigung eines Bedienelementes die zweite Abgabephase eingeleitet wird.

20. Verfahren nach einem der Ansprüche 17 bis 19, bei dem die Lösung mit der zu bestimmenden Substanz überwacht und bei Annäherung an den Zielpunkt der Titration die Geschwindigkeit des Kolbens reduziert und/oder die zweite Abgabephase eingeleitet wird.

## Claims

1. A system for titrating liquids with the following features:
- a syringe (1) or tip, comprising
- a holding device
and
- a metering equipment (13), comprising
- an additional holding device for holding the syringe (1) or tip on the holding device,
- a driving device (18) having a motor (19),
- the driving device (18) being detachably coupled with a plunger (9) of the syringe (1) when the same is held by the additional holding device, or which is coupled with a plunger which is arranged in a cylinder which is coupled with the tip via a fluid conduit, when the same is held by the additional holding device,
- an operating device (23) for operating the metering equipment (13), **characterized in that**
- a control device (22) is connected with the operating device (23) and the driving device (18) and is constructed and arranged to control a movement of the plunger (9) for the delivery of big amounts of liquid in a first delivery phase when an operating element (23.2) of the operating device (23) is actuated, and the rest of the plunger (9) when the operating element is not actuated, wherein the control device (22) reduces the speed of the plunger (9) with respect to its speed at the preceding actuation at every subsequent actuation of the operating element (23.2) and controls a movement of the plunger (9) for the delivery of at least one small defined amount of liquid in the form of droplets ejected from the syringe or tip in a second delivery phase when triggered by an actuation of the operating device (23) or by reaching the end of the first delivery phase.

2. A system according to claim 1, wherein the control device (22) controls the delivery of small defined amounts of liquid having a volume smaller than 1/100 of the nominal volume of the syringe (1) or tip.

3. A system according to claim 2, wherein the control device (22) controls the delivery of small defined amounts of liquid having a volume smaller than 1/500 of the nominal volume of the syringe (1) or tip.

4. A system according to claim 3, wherein the control device (22) controls the delivery of small defined amounts of liquid having a volume in the region of about one or several thousandths of the nominal volume of the syringe (1) or tip.

5. A system according to claim 1, wherein the control device (22) controls a movement of the plunger (9) only for a predetermined number of actuations of the operating element, and initiates the second delivery phase when the maximum number has been reached.

6. A system according to any one of the claims 1 to 5, wherein the control device (22) is constructed and arranged to initiate the second delivery phase upon a defined actuation of the operating device.

7. A system according to one of the claims 1 to 6, wherein the control device (22) is connected with a sensor which aims at a volume to which the delivery opening of a syringe (1) or tip is directed when it is held by the additional holding device on the metering equipment (13), in order to detect an approach to the end point of the titration, and the control device (22) is constructed and arranged to reduce the speed of the plunger (9) and/or initiates the second delivery phase when approaching the end point of the titration in the first delivery phase.

8. A system according to any one of the claims 1 to 7, wherein the holding device comprises a flange (5) on a cylindrical or sleeve-shaped body of the syringe (1) or tip and/or a collar at the end of a plunger (9) of the syringe (1).

9. A system according to any one of the claims 1 to 8, wherein the additional holding comprises a plug-in receptacle (14) of the metering equipment (13) and at least one clipper, which is movable from a position releasing the holding device to a position capturing the holding device in the plug-in receptacle (14).

10. A system according to any one of the claims 1 to 9, wherein the driving device (18) comprises an electric motor (19).

11. A system according to claim 10, wherein the electric motor (19) is a DC motor.

12. A system according to any one of the claims 1 to 11, wherein the control device (22) establishes the amount of liquid that has been delivered.

13. A system according to any one of the claims 1 to 12, wherein the driving device (18) and/or the plunger (9) is coupled with an increment transmitter for detecting the position of the plunger (9), and the control device (22) is coupled with a sensor for sensing the increment transmitter.

14. A system according to any one of the claims 1 to 13, wherein the operating device (23) comprises at least one electric push-button (23.2) and/or an electric switch.

15. A system according to any one of the claims 1 to 14, wherein the control device (22) is an electric control device.

16. A system according to claim 15, wherein the control device is program driven.

17. A method for titrating liquids with a system for titrating liquids comprising
- a syringe (1) or tip, comprising
- a holding device
and
- a metering equipment (13), comprising
- an additional holding device for holding the syringe (1) or tip on the holding device,
- a driving device (18) having a motor (19), the driving device (18) being detachably coupled with a plunger (9) of the syringe (1) when the same is held by the additional holding device, or which is coupled with a plunger which is arranged in a cylinder which is coupled with the tip via a fluid conduit, when the same is held by the additional holding device,
- an operating device (23) for operating the metering equipment (13), and
- a control device (22) connected with the operating device (23) and the driving device (18), wherein
- a syringe or tip is detachably connected to a metering equipment,
- in a first delivery phase a plunger of the syringe or a plunger in a cylinder connected to the tip is moved for the delivery of large amounts of liquid upon actuation of an operating element and is stopped upon release of the operating element, and wherein at every subsequent actuation of the operating element the speed of the plunger with respect to its speed at a preceding actuation is reduced in the first delivery phase,
- the plunger is moved for the delivery of at least one small defined amount of liquid in a second delivery phase in the form of droplets ejected from the syringe or tip.

18. A method according to claim 17, wherein the second delivery phase is initiated after a predetermined number of actuations of the operating element.

19. A method according to claim 17 or 18, wherein the second delivery phase is initiated after a special actuation of an operating element.

20. A method according to any one of the claims 17 to 19, wherein the solution with the substance to be determined is monitored and upon approaching the end point of the titration, the speed of the plunger is reduced and/or the second delivery phase is initiated.

## Revendications

1. Système de titrage de liquides présentant les caractéristiques suivantes:
- une seringue (1) ou une pointe, comprenant
- un dispositif de maintien,
et
- un dispositif de dosage (13), comprenant
- un autre dispositif de maintien pour maintenir la seringue (1) ou la pointe sur le dispositif de maintien,
- un dispositif d'entraînement (18) comportant un moteur (19),
- dans lequel le dispositif d'entraînement (18) est couplé de façon amovible à un piston (9) de la seringue (1) quand celle-ci est maintenue par ledit autre dispositif de maintien, ou est couplé à un piston qui est agencé dans un cylindre connecté à la pointe via une conduite de liquide quand ladite pointe est maintenue par ledit autre dispositif de maintien,
- un dispositif de commande (23) pour commander le dispositif de dosage (13),
**caractérisé par**
- un dispositif de régulation (22) connecté au dispositif de commande (23) et au dispositif d'entraînement (18), constitué de telle sorte qu'il régule un déplacement du piston (9) pour l'administration de grandes quantités de liquide dans une première phase d'administration lors de l'actionnement d'un élément de commande (23.2) du dispositif de commande (23), et le repos du piston (9) lors d'un non-actionnement de l'élément de commande, dans lequel le dispositif de régulation (22) réduit la vitesse du piston (9) à chaque actionnement successif de l'élément de commande (23.2) par rapport à la vitesse lors de l'actionnement précédent, et régule un déplacement du piston (9) pour l'administration d'au moins une petite quantité de liquide définie dans une deuxième phase d'administration lors d'un déclenchement du fait d'un actionnement du dispositif de commande (23) ou du fait que la fin de la première phase d'administration est atteinte, **caractérisé en ce que** l'administration d'au moins une petite quantité de liquide définie s'effectue sous forme de gouttelettes éjectées par la seringue ou la pointe.

2. Système selon la revendication 1, dans lequel le dispositif de régulation (22) régule l'administration de petites quantités de liquide définies avec un volume inférieur à 1/100e du volume nominal de la seringue (1) ou de la pointe.

3. Système selon la revendication 2, dans lequel le dispositif de régulation (22) régule l'administration de petites quantités de liquide définies avec un volume inférieur à 1/500e du volume nominal de la seringue (1) ou de la pointe.

4. Système selon la revendication 3, dans lequel le dispositif de régulation (22) régule l'administration de petites quantités de liquide définies avec un volume compris dans une plage approximative d'un à plusieurs millièmes du volume nominal de la seringue (1) ou de la pointe.

5. Système selon la revendication 1, dans lequel le dispositif de régulation (22) est constitué de telle sorte qu'il régule un déplacement du piston (9) seulement durant un nombre prédéterminé d'actionnements de l'élément de commande et déclenche la deuxième phase d'administration après avoir atteint le nombre maximal.

6. Système selon l'une des revendications 1 à 5, dans lequel le dispositif de régulation (22) est constitué de telle sorte qu'il déclenche la deuxième phase d'administration lors d'un actionnement défini du dispositif de commande.

7. Système selon l'une des revendications 1 à 6, dans lequel le dispositif de régulation (22) est connecté à un capteur qui est réglé en fonction d'un volume sur lequel est réglé l'orifice d'administration d'une seringue (1) ou d'une pointe quand celle-ci est maintenue sur le dispositif de dosage (13) par ledit autre dispositif de maintien afin de détecter l'approximation du point cible du titrage, et le dispositif de régulation (22) est constitué de telle sorte qu'il réduit la vitesse du piston (9) et/ou déclenche la deuxième phase d'administration lors de l'approchement du point cible du titrage au cours de la première phase d'administration.

8. Système selon l'une des revendications 1 à 7, dans lequel le dispositif de maintien comporte une bride (5) sur un corps en forme de cylindre ou de manchon de la seringue (1) ou de la pointe et/ou un collier à l'extrémité du piston (9) de la seringue (1).

9. Système selon l'une des revendications 1 à 8, dans lequel ledit autre dispositif de maintien comporte une douille (14) du dispositif de dosage (13) et au moins un dispositif de saisie qui peut être déplacé d'une position de libération du dispositif de maintien à une position de saisie du dispositif de maintien à l'intérieur de la douille (14).

10. Système selon l'une des revendications 1 à 9, dans lequel le dispositif d'entraînement (18) comporte un moteur électrique (19).

11. Système selon la revendication 10, dans lequel le moteur électrique (19) est un moteur à courant continu.

12. Système selon l'une des revendications 1 à 11, dans lequel le dispositif de régulation (22) est constitué de telle sorte qu'il détermine la quantité de liquide administrée.

13. Système selon l'une des revendications 1 à 12, dans lequel le dispositif d'entraînement (18) et/ou le piston (9) est couplé à un incrémenteur pour déterminer la position du piston (9) et le dispositif de régulation (22) est couplé à un capteur pour lire l'incrémenteur.

14. Système selon l'une des revendications 1 à 13, dans lequel le dispositif de commande (23) comporte au moins un bouton électrique (23.2) et/ou un interrupteur électrique.

15. Système selon l'une des revendications 1 à 14, dans lequel le dispositif de régulation (22) est un dispositif de régulation électrique.

16. Système selon la revendication 15, dans lequel le dispositif de régulation (22) est commandé par un programme.

17. Procédé de titrage de liquides avec un système de titrage de liquides comportant
- une seringue (1) ou une pointe, comprenant
- un dispositif de maintien,
et
- un dispositif de dosage (13), comprenant
- un autre dispositif de maintien pour maintenir la seringue (1) ou la pointe sur le dispositif de maintien,
- un dispositif d'entraînement (18) comportant un moteur (19), couplé de façon amovible à un piston (9) de la seringue (1) quand celle-ci est maintenue par ledit autre dispositif de maintien, ou couplé à un piston qui est agencé dans un cylindre connecté à la pointe via une conduite de fluide quand ladite pointe est maintenue par ledit autre dispositif de maintien,
- un dispositif de commande (23) pour commander le dispositif de dosage (13), et
- un dispositif de régulation (22) connecté au dispositif de commande (23) et au dispositif d'entraînement (18), dans lequel
- une seringue ou une pointe est connectée de façon amovible à un dispositif de dosage,
- dans une première phase d'administration, un piston de la seringue ou un piston dans un cylindre connecté à la pointe se déplace pour administrer de grandes quantités de liquide lors de l'actionnement d'un élément de commande, et est maintenu lors d'un relâchement de l'élément de commande, et la vitesse du piston est réduite à chaque actionnement successif de l'élément de commande par rapport à la vitesse lors d'un actionnement précédent, et
- dans une deuxième phase d'administration, le piston est déplacé à chaque actionnement de l'élément de commande pour l'administration d'au moins une petite quantité de liquide définie sous forme de gouttelettes éjectées par la seringue ou la pointe.

18. Procédé selon la revendication 17, dans lequel la deuxième phase d'administration est déclenchée après un nombre prédéterminé d'actionnements de l'élément de commande.

19. Procédé selon la revendication 17 ou 18, dans lequel la deuxième phase d'administration est déclenchée après un actionnement spécial d'un élément de commande.

20. Procédé selon l'une des revendications 17 à 19, dans lequel la dissolution avec la substance à déterminer est surveillée et la vitesse du piston est réduite et/ou la deuxième phase d'administration est déclenchée lors de l'approximation du point cible du titrage.
